**Europäisches Patentamt**

**European Patent Office**

**Office européen des brevets**

(19)

(11) Numéro de publication : **0 024 968**
**B1**

(12) **FASCICULE DE BREVET EUROPÉEN**

(45) Date de publication du fascicule du brevet :
30.03.83

(51) Int. Cl.³ : **F 16 L 37/26, B 25 B 27/16**

(21) Numéro de dépôt : **80401127.8**

(22) Date de dépôt : **30.07.80**

(54) **Raccord autoverrouillable et outil pour son serrage.**

(30) Priorité : **14.08.79 FR 7920691**

(43) Date de publication de la demande :
**11.03.81 Bulletin 81/10**

(45) Mention de la délivrance du brevet :
**30.03.83 Bulletin 83/13**

(84) Etats contractants désignés :
**BE CH DE GB IT LI NL SE**

(56) Documents cités :
**DE B 1 094 058**
**DE C 336 262**
**US A 1 739 131**
**US A 3 260 539**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Abbes, Claude**
**"Les Primevères" 5 Montée du Cret du Loup**
**F-42100 Saint Etienne (FR)**
Inventeur : **De Villepoix, Raymond**
**"La Chatelière"**
**F-26290 Donzere (FR)**
Inventeur : **Rouaud, Christian**
**"Les Genêts"**
**F-07700 Bourg Saint Andeol (FR)**

(74) Mandataire : **Mongrédien, André et al**
**c/o BREVATOME 25, rue de Ponthieu**
**F-75008 Paris (FR)**

EP 0 024 968 B1

Raccord autoverrouillable et outil pour son serrage

L'invention, concerne un raccord autoverrouillable destiné à être placé entre deux parties d'un circuit à raccorder, telles que deux tuyauteries ou une tuyauterie et une vanne, ainsi qu'un outil particulièrement adapté au serrage d'un tel raccord.

L'invention se rapporte plus précisément à un raccord du type comprenant deux embouts susceptibles d'être fixés à deux parties de circuit à raccorder, au moins deux demi-coquilles présentant des surfaces tronconiques internes venant engager des surfaces tronconiques externes complémentaires formées sur les embouts, pour solliciter ces derniers en contact étanche lorsque les demi-coquilles sont sollicitées radialement l'une vers l'autre.

On connaît de nombreux raccords de ce type dans lesquels le serrage est généralement effectué au moyen de vis ou de boulons traversant les coquilles selon des axes perpendiculaires à leur plan de joint. En raison de ce mode de serrage, les raccords de ce type deviennent pratiquement inutilisables lorsque l'accès au circuit dans lequel doit être inséré le raccord est difficile, notamment lorsque le circuit est disposé derrière une cloison étanche. Une telle situation se présente dans de nombreux domaines, et notamment dans l'industrie nucléaire.

L'invention se rapporte plus précisément à un raccord de conception particulièrement simple et dont le montage et le démontage peuvent être réalisés sans difficulté même à distance et lors que l'accès aux deux parties du circuit à raccorder se fait à travers une paroi n'autorisant qu'un accès radial. Le raccord selon l'invention n'est cependant pas limité à cette application particulière et peut également être utilisé lorsque l'accès au circuit ne présente aucune difficulté.

Ainsi, conformément à l'invention, il est proposé un raccord du type défini précédemment caractérisé en ce qu'il comprend des moyens de verrouillage automatiques disposés sur les flancs des deux demi-coquilles, et en ce que chacune des demi-coquilles est rendue solidaire de l'un des embouts par des moyens de liaison autorisant un déplacement radial de la demi-coquille par rapport à l'embout correspondant tout en maintenant l'axe de l'embout parallèle à celui de la demi-coquille.

Selon un mode de réalisation particulier de l'invention, les moyens de liaison peuvent comprendre des vis, ou analogues, fixées à l'embout et traversant la demi-coquille selon un axe situé dans un plan radial et parallèle à la génératrice des surfaces tronconiques de la demi-coquille et de l'embout correspondant contenue dans ce plan.

Conformément à une autre caractéristique de l'invention, les moyens de verrouillage comprennent au moins une lame de ressort s'étendant dans un plan radial à partir de l'une des demi-coquilles et présentant au moins un trou dans lequel vient s'engager un pion de verrouillage fixé à l'autre demi-coquille. De préférence, l'extrémité libre de la lame de ressort est recourbée en éloignement du pion de façon à faciliter l'introduction de ce dernier dans le trou.

Conformément à une autre caractéristique de l'invention, afin de faciliter le centrage des embouts, l'un des embouts comprend une saillie cylindrique susceptible de venir s'engager dans un dégagement cylindrique complémentaire formé dans l'autre embout, ledit dégagement étant ouvert radialement pour permettre l'introduction de la saillie cylindrique selon une direction perpendiculaire à l'axe des embouts. Dans ce cas, l'un au moins des embouts peut comprendre un logement susceptible de recevoir un joint d'étanchéité annulaire.

Selon encore une autre caractéristique de l'invention, des surfaces de préhension destinées à recevoir un outil de serrage sont formées sur chaque demi-coquille.

L'invention a également pour objet un outil de serrage d'un raccord autoverrouillable du type défini ci-dessus, cet outil étant caractérisé en ce qu'il comprend une première partie munie de deux bras dont les extrémités sont susceptibles de prendre appui sur deux surfaces de préhension appropriées formées sur l'une des demi-coquilles, une seconde partie portant deux branches articulées sollicitées en rapprochement l'une de l'autre contre des surfaces inclinées formées sur la première partie par des moyens élastiques, les extrémités des branches articulées portant deux ergots susceptibles de prendre appui sur deux surfaces de préhension appropriées formées sur l'autre demi-coquille, et des moyens de serrage susceptibles de déplacer lesdites parties l'une par rapport à l'autre dans une direction radiale par rapport au raccord.

On décrira maintenant, à titre d'exemple non limitatif, un mode de réalisation particulier de l'invention en se référant aux dessins annexés dans lesquels :

la figure 1 est une vue en coupe transversale d'un raccord réalisé conformément aux enseignements de la présente invention, ce raccord étant représenté dans la position qu'il occupe avant son montage,

la figure 2 est une vue en coupe transversale du raccord représenté sur la figure 1, les demi-coquilles et les lames ressort étant représentées en traits mixtes dans la position qu'elles occupent en cours de montage et en trait plein dans la position qu'elles occupent après le serrage, et

la figure 3 est une vue en bout du raccord monté représenté sur la figure 2, et d'un outil de serrage de ce raccord réalisé conformément à l'invention.

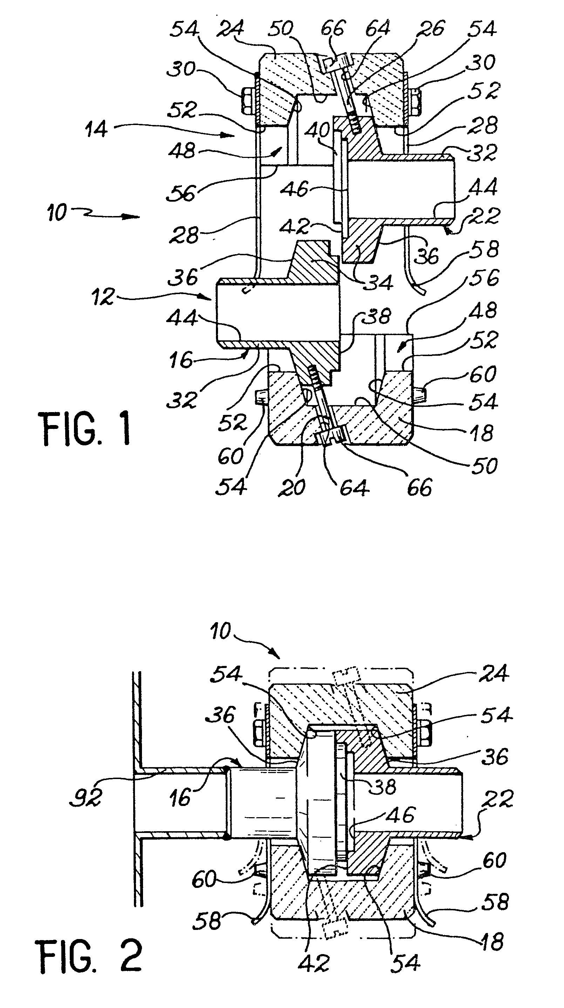

Le raccord 10 représenté sur la figure 1 comprend deux sous-ensembles désignés respectivement par les références 12 et 14. Le sous-ensemble 12 comprend un embout 16 et une demi-coquille 18 solidarisés par une vis 20, alors que le sous-ensemble 14 comprend un embout 22 et une demi-coquille 24 solidarisés par une vis 26, ainsi que deux lames de ressort 28 fixées à la demi-coquille 24 par des vis 30.

Chacun des embouts 16 et 22 comprend une partie tubulaire 32 prévue pour être fixée de façon étanche, par exemple par soudure, à deux parties d'un circuit à raccorder, telles que deux tuyauteries ou une tuyauterie et un appareil de mesure ou de contrôle, par exemple une vanne. Chacun des embouts 16 et 22 comprend également une partie de plus grand diamètre 34 raccordée à la partie tubulaire 32 par une surface tronconique 36. La face d'extrémité de la partie de plus grand diamètre de l'embout 16 comprend une saillie cylindrique 38 et la face d'extrémité de la partie de plus grand diamètre de l'embout 22 comprend un dégagement cylindrique 40 complémentaire de la saillie 38. Afin de permettre à la saillie 38 de venir s'engager radialement dans le dégagement 40 comme l'enseigne le montage du raccord selon l'invention, le dégagement 40 est muni d'une ouverture radiale 42 dont la largeur autorise le passage de la saillie 38. Chacun des embouts 16 et 22 est percé d'un passage 44 et un logement 46 est formé dans la face d'extrémité de la partie de plus grand diamètre de l'embout 22 de façon à recevoir un joint d'étanchéité annulaire (non représenté) permettant d'assurer l'étanchéité de la communication entre les passages 44 lorsque le raccord est assemblé.

Chacune des demi-coquilles 18 et 24 présente un évidement semi-cylindrique 48 dont la partie centrale 50 est d'un diamètre légèrement supérieur au diamètre externe des parties de grand diamètre 34 des embouts et dont les extrémités 52 sont d'un diamètre légèrement supérieur au diamètre externe des parties tubulaires 32 des embouts. Les parties 50 et 52 des évidements 48 sont reliées par des surfaces semi-tronconiques 54 complémentaires des surfaces 36 formées sur les embouts et dont l'espacement est déterminé de façon à assurer un contact entre les surfaces 36 et 54 aussi bien lorsque le raccord est desserré que lorsqu'il est serré. Chacune des demi-coquilles 18 et 24 définit en outre une surface de joint 56 disposée légèrement en retrait par rapport à l'axe de l'évidement 48 formé dans la demi-coquille correspondante, de façon à ne pas entraver le serrage du raccord.

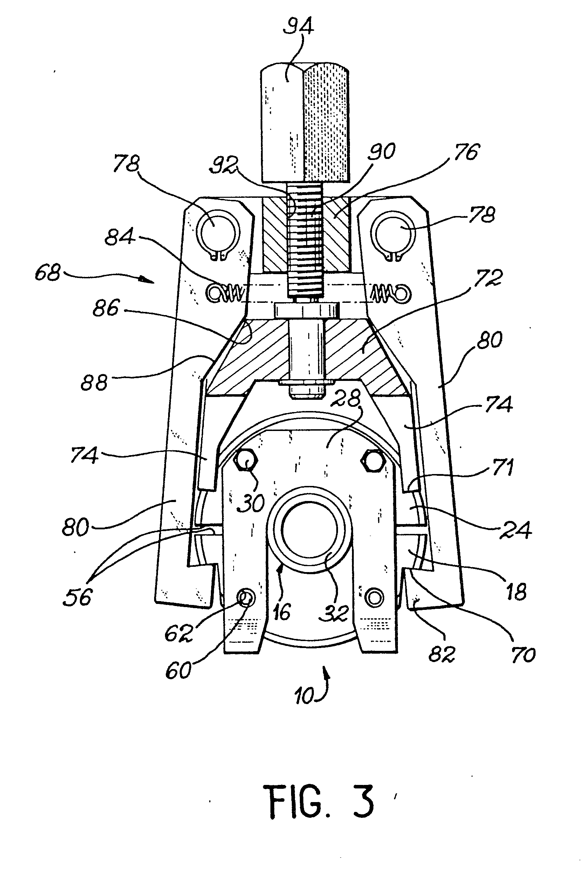

Comme le montre en particulier la figure 3, chacune des lames de ressort 28 présente la forme d'un U dont les deux branches contournent la partie tubulaire 32 de l'embout correspondant pour venir engager les faces d'extrémité de la demi-coquille 18. L'extrémité 58 de chacune de ces branches (figure 2) est recourbée en éloignement des faces d'extrémité de la coquille 18 de façon à permettre à ces branches de monter sur des pions de verrouillage 60 faisant saillie sur les faces d'extrémité de la demi-coquille 18. Les branches de chacune des lames de ressort 28 peuvent ainsi être déplacées par rapport à la demi-coquille 18 jusqu'à ce que les pions tronconiques de verrouillage 60 se trouvent en vis-à-vis de trous de verrouillage 62 formés dans ces branches. Le diamètre des trous 62 est égal au grand diamètre des pions tronconiques 60, ce qui permet aux lames de ressort 28 de reprendre leur position de repos sensiblement plane représentée sur la figure 1 par pénétration des pions 60 dans les trous 62 et assure ainsi le verrouillage du raccord.

Afin de faciliter le montage du raccord, et notamment lorsque ce raccord est destiné à être utilisé dans un endroit d'accès difficile nécessitant une manœuvre à distance, l'embout 16 est rendu solidaire de la demi-coquille 18 par la vis 20 et l'embout 22 est rendu solidaire de la demi-coquille 24 par la vis 26, de façon à constituer les deux sous-ensembles 12 et 14. Les vis 20 et 26, qui peuvent être remplacées par tous dispositifs de liaison analogues, sont fixées respectivement dans la partie de grand diamètre 34 de chacun des embouts 16 et 22 et traversent librement des trous 64 formés dans les demi-coquilles, de telle sorte que la tête 66 de chacune des vis rende chaque demi-coquille solidaire de l'embout correspondant, tout en autorisant un déplacement radial des demi-coquilles par rapport aux embouts afin de permettre le serrage et le desserrage du raccord. La direction de ce déplacement est déterminée par les axes des vis 20 et 26 qui sont situés dans un plan radial par rapport aux embouts 16 et 22, respectivement, et qui s'étendent parallèlement à la génératrice de la surface tronconique 36 la plus proche située dans ce plan. La direction du déplacement des demi-coquilles par rapport aux embouts est également déterminée par les axes des trous 64 qui sont tous deux situés dans le plan radial médian de l'embout correspondant et disposés parallèlement à la génératrice de l'une des surfaces semi-tronconiques 54 située dans ce plan médian. En outre, la distance séparant les axes des vis 20 et 26 des génératrices les plus proches des surfaces 36 est sensiblement égale à la distance séparant les axes des trous 64 des génératrices les plus proches des surfaces 54, de telle sorte que la surface 36 de l'embout 16 est constamment en contact avec la surface 54 de la demi-coquille 18 et que la surface 36 de l'embout 22 est constamment en contact avec la surface 54 de la demi-coquille 24. Grâce à l'assemblage ainsi réalisé de chacun des sous-ensembles 12 et 14, les déplacements des demi-coquilles 18 et 24 par rapport aux embouts 16 et 22 sont tels que les axes des demi-coquilles restent constamment parallèles aux axes des embouts.

Afin de faciliter le montage du raccord au moyen d'un outil de serrage tel que l'outil 68 représenté sur la figure 3, chacune des demi-coquilles 18 et 24 présente des surfaces de préhension 70 et 71, respectivement constituées par des entailles réalisées à la périphérie des demi-coquilles. Les surfaces de préhension 70 et 71 sont légèrement inclinées vers l'axe du raccord par rapport aux surfaces de joint 56 et elles sont disposées symétriquement par rapport à un plan normal aux surfaces 56 et passant par l'axe du raccord.

L'outil de serrage 68 comprend une première partie 72 munie de deux bras 74 dont les extrémités viennent prendre appui contre les surfaces de préhension formées sur l'une des demi-coquilles, telles que les surfaces 71 formées sur la demi-coquille 24, dans le mode de réalisation représenté sur la figure 3. L'outil 68 comprend également une seconde partie 76 sur laquelle deux branches 80 sont articulées autour de deux axes 78. Les branches 80 sont disposées à l'extérieur des bras 74 et s'étendent au-delà de l'extrémité de ces derniers de façon à venir prendre appui au moyen de deux ergots 82 sur les surfaces de préhension 70 formées sur l'autre demi-coquille 18. Un ressort 84 sollicite les branches 80 en rapprochement l'une de l'autre, de telle sorte que les bras 80 coopèrent par deux surfaces inclinées 86 avec deux surfaces inclinées en vis-à-vis 88 formées sur la première partie 72. Les parties 72 et 76 sont rendues solidaires l'une de l'autre par des moyens de serrage constitués par une tige filetée 90 montée tournante dans la partie 72 et reçue dans un taraudage 92 formé dans la partie 76, la rotation de la tige 90 pouvant être commandée au moyen d'une tête de manœuvre 94 fixée rigidement à la tige 90. Comme le montre la figure 3, l'axe de la tige filetée 90 est situé dans le plan de symétrie de l'outil 68, ce plan étant lui-même confondu avec le plan de symétrie du raccord, c'est-à-dire avec le plan normal aux surfaces de joint 56 et passant par l'axe du raccord lorsque l'outil est mis en place sur ce dernier.

La mise en place du raccord qui vient d'être décrit au moyen de l'outil représenté sur la figure 3, et le démontage de ce raccord s'effectuent de la façon suivante.

Au moins l'un des embouts 16 et 22 ayant été fixé de façon étanche, par exemple par soudure, à une partie 92 (figure 2) de circuit à raccorder telle qu'une tuyauterie ou qu'un appareil de contrôle ou de mesure, les deux sous-ensembles 12 et 14 sont disposés radialement en vis-à-vis l'un de l'autre comme l'illustre la figure 1 et les axes des embouts 16 et 22 sont immédiatement alignés comme l'illustre la figure 2 par emboîtement radial de la saillie cylindrique 38 dans le dégagement cylindrique 40 par l'ouverture radiale 42. Chacune des demi-coquilles 18 et 24 est alors maintenue radialement espacée des embouts sous l'action des lames de ressort 28 dont les extrémités recourbées 58 prennent appui contre les pions de verrouillage 60. Cette position est représentée en traits mixtes sur la figure 2.

Le serrage proprement dit est réalisé au moyen de l'outil 68 dont les branches 80 sont d'abord écartées à l'encontre du ressort 84 en faisant tourner la tête de manœuvre 94 dans le sens correspondant au rapprochement des parties 72 et 76 par rapport à la position représentée sur la figure 3. Cet écartement des branches 80, obtenu grâce à la coopération des surfaces inclinées 86 et 88, est suffisant pour permettre le passage des ergots 82 au-delà du plan de joint du raccord. L'outil 68 peut ainsi être positionné de telle sorte que les extrémités des bras 74 viennent en appui sur les surfaces de préhension 71. La mise en place et le serrage de l'outil 68 sont alors réalisés en faisant tourner la tige filetée 90 par sa tête de manœuvre 94 dans le sens correspondant à l'éloignement des parties 72 et 76. Les ergots 82 viennent ainsi en appui sur les surfaces de préhension 70 formées sur la demi-coquille inférieure en considérant cette figure, et la suite de la rotation de la tige filetée 90 a pour effet de rapprocher les demi-coquilles 18 et 24. Ce rapprochement a pour conséquence de solliciter les embouts 16 et 22 l'un vers l'autre par suite de la coopération des surfaces tronconiques 36 avec les surfaces tronconiques 54. Au cours de ce rapprochement, la face d'extrémité de la partie de grand diamètre 34 de l'embout 16 vient écraser le joint (non représenté) placé au préalable dans le logement 46, de telle sorte que l'étanchéité entre les passages 44 et entre les parties correspondantes du circuit à raccorder est réalisée. Le dimensionnement des différentes parties du raccord est tel que les lames de ressort 28 qui se sont écartées des faces d'extrémité de la demi-coquille 18 par suite de leur coopération avec les pions de verrouillage 60 au cours du serrage du raccord par l'outil 68, viennent alors dans la position représentée en traits pleins sur la figure 2, dans laquelle les pions 60 sont en vis-à-vis des trous 62 formés dans les lames de ressort et pénètrent dans ces derniers afin de réaliser le verrouillage du raccord.

Le démontage de l'outil 68 peut être effectué simplement en sollicitant la tige filetée 90 en rotation dans le sens du desserrage afin de déplacer la partie 72 vers la partie 76, ce qui provoque l'écartement des branches 80 et dégage les ergots 82 des surfaces de préhension 70 formées sur la demi-coquille correspondante. L'outil 68 peut alors être enlevé sans difficulté.

Le démontage du raccord selon l'invention peut également être réalisé très simplement au moyen d'un autre outil (non représenté) permettant d'écarter les lames de ressort 28 des faces d'extrémité de la demi-coquille 18, de façon à dégager les pions 60 des trous 62, cet outil étant muni de becs venant s'insérer entre les surfaces en vis-à-vis 56 des demi-coquilles afin de solliciter celles-ci en écartement l'une de l'autre.

On remarquera que le raccord selon l'invention, notamment lorsqu'il est mis en place au moyen de l'outil représenté sur la figure 3 est particulièrement adapté au raccordement de deux parties d'un circuit disposé dans un endroit particulièrement peu accessible, tel qu'un circuit disposé à l'intérieur d'une enceinte ou derrière une cloison étanche. En effet, ce raccord se compose simplement de deux sous-ensembles dont la mise en place, le serrage et le desserrage peuvent être effectués facilement au travers d'un accès radial unique et de dimensions très réduites. Cependant, l'invention n'est pas limitée à ce type d'application et peut également être utilisée pour raccorder deux parties d'un circuit ne présentant pas de problème d'accessibilité. Dans ce cas, il est alors possible de supprimer les vis reliant les embouts et les demi-coquilles en deux sous-ensembles et de supprimer ou de modifier les surfaces de préhension 70 et 71 en fonction du mode de serrage utilisé.

Bien entendu, l'invention n'est pas limitée au mode de réalisation décrit à titre d'exemple, mais en couvre toutes les variantes. Ainsi, les moyens de verrouillage du raccord que constituent les lames de ressort 28 et les pions 60 peuvent être modifiés, les pions pouvant être par exemple portés par les lames de ressort, les trous étant alors réalisés dans les demi-coquilles, chaque demi-coquille pouvant également porter une ou plusieurs lames de ressort coopérant avec un pion ou un trou formé sur l'autre demi-coquille.

## Revendications

1. Raccord du type comprenant deux embouts (16, 22) susceptibles d'être fixés à deux parties de circuit à raccorder, deux demi-coquilles (18, 24) présentant des surfaces tronconiques internes (54) venant engager des surfaces tronconiques externes complémentaires (36) formées sur les embouts, pour solliciter ces derniers en contact étanche lorsque les deux demi-coquilles sont sollicitées radialement l'une vers l'autre, caractérisé en ce que des moyens de verrouillage automatiques (28, 60, 62) sont disposés sur les flancs des demi-coquilles, chacune des demi-coquilles étant rendue solidaire de l'un des embouts par des moyens de liaison (20, 26) autorisant un déplacement radial de la demi-coquille par rapport à l'embout correspondant tout en maintenant l'axe de l'embout parallèle à celui de la demi-coquille.

2. Raccord selon la revendication 1, caractérisé en ce que les moyens de liaison comprennent des vis (20, 26), ou analogues, fixées à l'embout (16, 22) et traversant la demi-coquille (18, 24) selon un axe situé dans un plan radial et parallèle à la génératrice des surfaces tronconiques (54, 36) de la demi-coquille et de l'embout correspondant contenu dans ce plan.

3. Raccord selon l'une quelconque des revendications précédentes, caractérisé en ce que les moyens de verrouillage comprennent au moins une lame de ressort (28) s'étendant dans un plan radial à partir de l'une des demi-coquilles et présentant au moins un trou (62) dans lequel vient s'engager un pion de verrouillage (60) fixé à l'autre demi-coquille.

4. Raccord selon la revendication 3, caractérisé en ce que l'extrémité libre (58) de la lame de ressort (28) est recourbée en éloignement du pion (60) de façon à faciliter l'introduction de ce dernier dans le trou (62).

5. Raccord selon l'une quelconque des revendications précédentes, caractérisé en ce que l'un des embouts (16) comprend une saillie cylindrique (38) susceptible de venir s'engager dans un dégagement cylindrique complémentaire (40) formé dans l'autre embout (22), ledit dégagement étant ouvert radialement pour permettre l'introduction de la saillie cylindrique selon une direction perpendiculaire à l'axe des embouts.

6. Raccord selon la revendication 5, caractérisé en ce que l'un au moins (22) des embouts comprend un logement (46) susceptible de recevoir un joint d'étanchéité annulaire.

7. Raccord selon l'une quelconque des revendications précédentes, caractérisé en ce que des surfaces de préhension (70, 71) destinées à recevoir un outil de serrage (68) sont formées sur chaque demi-coquille.

8. Outil de serrage d'un raccord autoverrouillable selon la revendication 7, caractérisé en ce qu'il comprend une première partie (72) munie de deux bras (74) dont les extrémités sont susceptibles de prendre appui sur deux surfaces de préhension (71) appropriées formées sur l'une des demi-coquille, une seconde partie (76) portant deux branches articulées (80) sollicitées en rapprochement l'une de l'autre contre des surfaces inclinées (88) formées sur la première partie par des moyens élastiques (84), les extrémités des branches articulées portant deux ergots (82) susceptibles prendre appui sur deux surfaces de préhension appropriées (70) formées sur l'autre demi-coquille, et des moyens de serrage (90, 92, 94) susceptibles de déplacer lesdites parties l'une par rapport à l'autre dans une direction radiale par rapport au raccord.

## Claims

1. Coupling of the type comprising two endfittings (16, 22) adapted to be fixed to two parts of a circuit to be coupled, two half-clamps (18, 24) having frusto-conical internal surfaces (54) engageable with complementary frusto-conical external surfaces (36) formed on the end-fittings, to urge the latter into tight contact when the two half-clamps are urged radially together, characterized in that automatic locking means (28, 60, 62) are located on the end-faces of the two half-clamps, each of the half-clamps being fixed to one of the end-fittings by linking means (20, 26) permitting radial displacement of the half-clamp with respect to its corresponding end-fitting while maintaining the axis of the end-fitting parallel to that of the half-clamp.

2. Coupling according to Claim 1, characterized in that the linking means comprise screws (20, 26) or the like, fixed to the end-fitting and passing through the half-clamp (18, 24) along an axis lying in a radial plane parallel to the generatrix of the frusto-conical surfaces (54, 36) of the half-clamp and the corresponding end-fitting contained in the plane.

3. Coupling according to either of the preceding Claims, characterized in that the locking means comprise at least one leaf spring (28) extending in a radial plane from one of the half-clamps and having at least one hole (62) engageable with a locking pin (60) fixed to the other half-clamp.

4. Coupling according to Claim 3, characterized in that the free end (58) of the leaf spring (28) is bent away from the pin (60) whereby to facilitate the introduction of the latter into the hole (62).

5. Coupling according to any one of the preceding Claims, characterized in that one of the end-fittings (16) comprises a cylindrical projection (38) engageable with a complementary cylindrical recess (40) formed in the other end-fitting (22), said recess having a radial opening to allow entry of the cylindrical projection in a direction perpendicular to the axis of the end-fittings.

6. Coupling according to Claim 5, characterized in that at least one of the end-fittings (22) comprises a seating (46) adapted to receive an annular gasket.

7. Coupling according to any one of the preceding Claims, characterized in that gripping surfaces (70, 71) adapted to receive a locking device (68) are formed in each half-clamp.

8. A locking device for a self-locking coupling according to Claim 6, characterized in that it comprises a first part (72) having two arms (74) whose ends are adapted to bear on the two appropriately shaped gripping surfaces (71) of one half-clamp, a second part having two articulated branches urged towards one another by elastic means (84) against inclined surfaces (88) formed on the first part, the ends of the articulated branches having two lugs (82) adapted to bear on two appropriately shaped gripping surfaces (70) of the other half-clamp, and locking means (90, 92, 94) for displacing said parts with respect to one another radially of the coupling.

**Ansprüche**

1. Verbindung mit zwei an zwei miteinander zu verbindenden Teilen eines Leitungskreises anbringbaren Kopfteilen (16, 22) und zwei Halbschalen (18, 24) jeweils mit einer kegelstumpfförmigen Innenfläche (54), welche an einer komplementären, kegelstumpfförmigen Außenfläche (36) des jeweiligen Kopfteils in Anlage kommt, wenn die beiden Halbschalen radial aufeinander zu bewegt werden, um die Kopfteile in abdichtende gegenseitige Anlage zu belasten, dadurch gekennzeichnet, daß auf den Flanken der beiden Halbschalen automatische Verriegelungseinrichtungen (28, 60, 62) angeordnet sind und daß jede Halbschale über Verbindungseinrichtungen (20, 26) derart mit einem der Kopfteile verbunden ist, daß die jeweilige Halbschale in bezug auf das betreffende Kopfteil radial bewegbar und dabei mit ihrer Achse parallel zu derjenigen des betreffenden Kopfteils geführt ist.

2. Verbindung nach Anspruch 1, dadurch gekennzeichnet, daß die Verbindungseinrichtungen Schrauben (20, 26) od. dergl. aufweisen, welche am Kopfteil (16, 22) befestigt sind und die Halbschale (18, 24) entlang einer Achse durchsetzen, welche in einer radialen Ebene und parallel zu einer in dieser Ebene enthaltenen Erzeugenden der kegelstumpfförmigen Flächen (54, 36) der Halbschale und des entsprechenden Kopfteils verläuft.

3. Verbindung nach einem der vorstehenden Ansprüche, dadurch gekennzeichnet, daß die Verriegelungseinrichtungen wenigstens eine sich von einer Halbschale aus in einer radialen Ebene erstreckende Blattfeder (28) aufweisen, welche wenigstens eine Öffnung (62) für den Eingriff einer an der anderen Halbschale befestigten Verriegelungsnase (60) aufweist.

4. Verbindung nach Anspruch 3, dadurch gekennzeichnet, daß das freie Ende (58) der Blattfeder (28) von der Verriegelungsnase (60) weggebogen ist, um den Eintritt derselben in die Öffnung (62) zu erleichtern.

5. Verbindung nach einem der vorstehenden Ansprüche, dadurch gekennzeichnet, daß eines der Kopfteile (16) einen zylindrischen Vorsprung (38) aufweist, welcher mit einem im anderen Kopfteil (22) geformten, komplementären zylindrischen Sitz (40) in Eingriff bringbar ist, wobei der Sitz in Radialrichtung offen ist, um das einführen des zylindrischen Vorsprungs in einer zur Achse der Kopfteile lotrechten Richtung zu ermöglichen.

6. Verbindung nach Anspruch 5, dadurch gekennzeichnet, daß wenigstens ein Kopfteil (22) einen Sitz (46) für die Aufnahme einer ringförmigen Dichtung aufweist.

7. Verbindung nach einem der vorstehenden Ansprüche, dadurch gekennzeichnet, daß an jeder Halbschale Angriffsflächen (70, 71) zum Ansetzen eines Anziehwerkzeugs (68) geformt sind.

8. Werkzeug zum Anziehen einer selbstverriegelnden Verbindung nach Anspruch 7, gekennzeichnet durch ein erstes Teil (72) mit zwei Armen (74), welche mit ihren Enden auf zwei an einer der Halbschalen geformten Angriffsflächen (71) aufsetzbar sind, durch ein zweites Teil (76) mit zwei daran angelenkten Armen (80), welche durch elastische Einrichtungen (84) aufeinander zu und in Anlage an am ersten Teil geformten Schrägflächen (88) belastet sind und an ihren Enden zwei Klauen (82) tragen, welche mit zwei an der anderen Halbschale geformten Angriffsflächen (70) in Eingriff bringbar sind, und durch eine Anzieheinrichtung (90, 92, 94), mittels welcher die beiden Teile in einer in bezug auf die Verbindung radialen Richtung relativ zueinander bewegbar sind.

FIG. 1

FIG. 2

FIG. 3